(19) Europäisches Patentamt / European Patent Office / Office européen des brevets

(11) **EP 3 065 987 B1**

(12) **FASCICULE DE BREVET EUROPEEN**

(45) Date de publication et mention
de la délivrance du brevet:
**24.04.2019 Bulletin 2019/17**

(21) Numéro de dépôt: **14806012.2**

(22) Date de dépôt: **05.11.2014**

(51) Int Cl.:
*B60W 30/18* *(2012.01)*

(86) Numéro de dépôt international:
**PCT/FR2014/052812**

(87) Numéro de publication internationale:
**WO 2015/067889 (14.05.2015 Gazette 2015/19)**

(54) **PROCEDE ET SYSTEME DE COMMANDE DU FREINAGE RECUPERATIF D'UN VEHICULE AUTOMOBILE ELECTRIQUE OU HYBRIDE**

VERFAHREN UND SYSTEM ZUM STEUERN DES REGENERATIVEN BREMSEN VON EINEM ELEKTRISCHEN ODER EINEM HYBRID FAHRZEUG

METHOD AND SYSTEM FOR OPERATING THE REGENERATIVE BRAKING OF AN ELECTRICAL OR A HYBRID VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.11.2013 FR 1360823**

(43) Date de publication de la demande:
**14.09.2016 Bulletin 2016/37**

(73) Titulaire: **Renault S.A.S.**
**92100 Boulogne-Billancourt (FR)**

(72) Inventeurs:
• **FONTVIEILLE, Laurent**
  **F-91190 Gif sur Yvette (FR)**
• **BUIS, Emmanuel**
  **F-91330 Verrieres le Buisson (FR)**
• **VERBEKE, Benoit**
  **F-78690 Les Essarts le Roi (FR)**

(56) Documents cités:
EP-A1- 0 754 588         WO-A1-2012/105896
DE-A1-102009 039 614     DE-A1-102010 054 913
US-B1- 6 364 434

## Description

L'invention a pour domaine technique le contrôle des groupes motopropulseurs électriques de véhicules électriques ou hybrides.

Le contrôle moteur est la technique de gestion d'un moteur électrique avec l'ensemble de ses capteurs, de l'électronique et du logiciel de commande. L'ensemble des lois de contrôle commande (stratégies logicielles) et des paramètres de caractérisation (calibrations) d'un moteur sont contenues dans un calculateur appelé UCE (unité de contrôle électronique).

Sur un véhicule électrique ou hybride, le contrôle moteur électrique permet d'interpréter la volonté du conducteur (pédales d'accélérateur et de frein) en consigne de couple positive ou négative. Cette consigne de couple fourni par le moteur (positive ou négative) est ensuite transmise à l'électronique de puissance (onduleur, hacheur,...etc.) qui assure l'élaboration des grandeurs de consignes électriques (tension et courant) correspondantes. Le moteur électrique assure la conversion de la puissance électrique en puissance mécanique qui est transmise aux roues sous forme de couple, éventuellement par l'intermédiaire d'un réducteur.

Cet ensemble d'organes électromécaniques assure la transmission du couple de consigne conducteur aux roues et est appelé chaîne de traction.

La présence d'une machine électrique dans un véhicule automobile permet de bénéficier de la réciprocité de son fonctionnement. On peut, lors des phases de freinage, convertir la puissance mécanique en puissance électrique pouvant être stockée dans la batterie. Ce freinage, dit récupératif, permet d'augmenter l'autonomie du véhicule et de réduire la consommation de carburant dans le cas d'un véhicule hybride.

Dans l'état de la technique, la zone de fonctionnement d'une machine électrique d'un véhicule électrique est délimitée par deux courbes, une courbe de couple maximal en mode moteur et une courbe de couple minimal en mode générateur.

La courbe de couple maximal en mode moteur est définie par les performances maximales de la chaine de traction avec une zone de couple constant (zone de faible régime) et une zone de puissance constante (zone de régime élevé).

La courbe de couple minimal en mode générateur est elle aussi en partie définie par les performances de la chaîne de traction mais est aussi modulée en fonction de la position de la pédale de frein. En effet sans appui sur la pédale de frein, la consigne de couple minimal permet de simuler un frein moteur. Lors de l'appui sur la pédale de frein, la consigne de couple est interpolée entre la consigne de couple en pied levé et la courbe de couple minimal en mode générateur. Plus l'appui sur la pédale de frein est important plus la consigne de couple tend vers le couple minimal en mode générateur.

La courbe de couple minimal sans appui frein est définie pour satisfaire un niveau de décélération lorsque le véhicule présente une masse proche de la masse de référence, et est soumis à une pente sensiblement nulle, ainsi qu'à des frottements de référence. Par conséquent, dans une descente lorsque le conducteur n'appuie ni sur l'accélérateur et ni sur le frein, le freinage récupératif se trouve limité par la courbe de couple minimal sans appui frein ce qui a pour effet :

- soit de limiter l'autonomie du véhicule avec une accélération excessive du véhicule,
- soit de solliciter le conducteur avec une action sur la pédale frein.

Inversement, dans une montée lorsque le conducteur n'appuie ni sur l'accélérateur et ni sur le frein, le freinage récupératif risque d'être trop important ce qui a pour effet :

- soit de produire une décélération excessive,
- soit de solliciter le conducteur avec une action sur la pédale d'accélérateur.

Par analogie, une augmentation de la masse du véhicule ou une diminution des frottements peuvent être assimilées à une descente. Inversement une diminution de la masse du véhicule ou une augmentation des frottements peuvent être assimilées à une montée.

Le document JP3441552 divulgue une méthode de contrôle du freinage récupératif d'un véhicule électrique basé sur le contrôle de la vitesse, de manière à limiter l'utilisation du frein mécanique en descente et donc à limiter son usure. Il ne tient cependant compte que de la pente.

Ainsi, dans les documents de l'état de la technique, on peut voir que le niveau de freinage récupératif est défini pour satisfaire un niveau de décélération uniquement à pente sensiblement nulle et que celui-ci n'est plus respecté :

- Lors des montées et descentes,
- Lors des variations de la masse du véhicule, (ex : nb d'occupants, remorque,...etc)

- Lors des variations des frottements du véhicule (ex : usure des pneumatiques, états du revêtement ...etc.)

Il apparait également dans certains documents, que le niveau de freinage récupératif est corrigé via une boucle de calcul ajoutant ou enlevant un incrément de couple en fonction du niveau de l'accélération. Cette correction est lente car il faut constater un écart d'accélération pour que la boucle de calcul puisse converger vers la bonne valeur de freinage récupératif.

Par conséquent, cette correction risque de générer des oscillations de couple si l'incrément est trop l'élevé et de générer des variations d'accélération si l'incrément est trop lent sur des pentes irrégulières,

Enfin, le document EP 0 754 588 A1 divulgue une commande de freinage récupératif tenant compte de la vitesse du véhicule et de données relatives à la résistance à l'avancement (par exemple: pente, masse du véhicule) dans le but de simuler le frein moteur du moteur thermique.

Il existe donc un besoin pour un procédé et un système de commande améliorant l'aptitude à prendre en compte la pente, la masse du véhicule et les éventuels frottements exercés sur le véhicule dans la détermination de la consigne de freinage sans appui sur la pédale de frein.

Un objet de l'invention est un procédé de commande du freinage récupératif d'un véhicule automobile muni d'un groupe motopropulseur électrique ou hybride. Le procédé comprend les étapes suivantes :

On détermine que le conducteur n'appuie ni sur la pédale d'accélérateur ni sur la pédale de frein,

On détermine un coefficient de correction en fonction du couple fourni par le moteur, de la vitesse du véhicule et de la vitesse angulaire au niveau de la roue, de la pente, de la masse du véhicule et des frottements, et

On détermine ensuite une consigne de freinage récupératif sans appui sur la pédale de frein en fonction du coefficient de correction et de deux cartographies de couple en fonction de la vitesse de rotation du groupe motopropulseur, pour une pente sensiblement nulle et une masse du véhicule sensiblement égale à une masse de référence du véhicule.

Le procédé peut comprendre une étape de modulation entre l'étape de détermination du coefficient de correction et l'étape de détermination de la consigne de freinage, au cours de laquelle on module le coefficient de correction en fonction d'au moins une valeur issue des conditions de roulage et des caractéristiques du véhicule, notamment la pente, la masse du véhicule ou des frottements exercés sur le véhicule.

Le procédé peut comprendre une étape de filtrage du coefficient de corrélation.

Un autre objet de l'invention est un système de commande du freinage récupératif d'un véhicule automobile muni d'un groupe motopropulseur électrique ou hybride. Le système comprend un moyen de détermination du coefficient de correction relié en entrée à un ensemble de capteurs et/ou de moyens d'estimation des conditions de roulage et des caractéristiques du véhicule ainsi qu'à un moyen de détermination apte à déterminer que la pédale d'accélérateur et de la pédale de frein ne sont pas enfoncées, et un moyen de détermination de la consigne de freinage relié en entrée au moyen de détermination du coefficient de correction et à des mémoires comprenant deux cartographies de consignes de freinage récupératif en fonction de la vitesse de rotation du groupe motopropulseur, pour une pente sensiblement nulle et une masse du véhicule sensiblement égale à une masse de référence du véhicule.

Le système peut comprendre un moyen de modulation connecté entre le moyen de détermination du coefficient de correction et le moyen de détermination de la consigne de freinage de sorte à moduler le coefficient de correction en fonction d'au moins une valeur issue des conditions de roulage et des caractéristiques du véhicule, notamment la pente, la masse du véhicule ou des frottements exercés sur le véhicule.

Le système peut comprendre un moyen de filtrage disposé en sortie du moyen de détermination du coefficient de correction de sorte à limiter l'amplitude des variations du coefficient de correction.

L'invention propose ainsi un nouveau principe de détermination du freinage récupératif sans appui sur la pédale de frein tenant compte de la pente (montant ou descendante) dans laquelle se trouve le véhicule.

L'invention présente donc l'avantage de ne pas présenter de temps de réponse car les corrections des consignes détendent uniquement des variations de la pente, de la masse et des frottements.

De plus, l'invention présente également l'avantage de ne générer ni oscillation de couple, ni variations d'accélération.

Elle a en outre aussi l'avantage de pouvoir apporter une adaptation aux variations de masse, pente, et de frottement (vent etc...) même dans les situations de décélération du véhicule.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre le procédé de commande du freinage récupératif d'un véhicule automobile électrique ou hybride, et
- la figure 2 illustre le système de commande du freinage récupératif d'un véhicule électrique ou hybride.

Le procédé de commande comprend globalement une étape au cours de laquelle on détermine successivement l'influence des variations de pente, de masse ou des frottements par rapport à un véhicule circulant sur un sol sensiblement plat. On détermine ensuite un facteur de correction reflétant les variations subies par le véhicule. Le procédé comprend ensuite une deuxième étape au cours de laquelle on détermine la consigne de freinage récupératif en fonction du facteur de correction.

Pour déterminer l'influence des variations de pente, de masse ou de frottements, on réalise un bilan de forces au niveau du véhicule en appliquant le principe fondamental de la dynamique. On obtient alors l'équation suivante :

$$\sum F = M \cdot \gamma \qquad (Eq.\ 1)$$

avec

$\sum F$ : la somme des forces appliquées au véhicule,
M : la masse du véhicule, et
y : l'accélération du véhicule.

Pour un véhicule circulant sur un sol sensiblement plat, c'est-à-dire sans pente, l'équation Eq. 1 peut être réécrite de la sorte.

$$\sum F = F_{Frottement} + F_{motrice} = M \cdot \gamma \qquad (Eq.\ 2)$$

Avec

$F_{Frottement}$ : les forces de frottement
$F_{motrice}$ : la force motrice générée par le véhicule

Dans le cas d'une variation de la pente, de la masse ou des frottements, on introduit un terme correctif $F_{Cor}$ homogène à une force. L'équation Eq. 2 est alors réécrite de la façon suivante :

$$\sum F = F_{Cor} + F_{Frottement} + F_{motrice} = M \cdot \gamma \qquad (Eq.\ 3)$$

De l'équation Eq. 3, on peut alors tirer l'expression suivante du terme correctif $F_{Cor}$ :

$$F_{Cor} = M \cdot \gamma - F_{Frottement} - F_{motrice} \qquad (Eq.\ 4)$$

En exprimant et en développant l'équation Eq. 4 au point de contact des roues avec le sol, on obtient l'équation suivante :

$$F_{Cor} = F_{roue} - F_{frottement} - F_{inertie} \qquad (Eq.\ 5)$$

Avec :

$F_{cor}$ = Force de correction appliqué à la roue fonction de la variation de l'angle de la pente $\alpha_{pente}$, de la masse et des frottements du véhicule,
$F_{roue}$ = Force motrice à la roue, et
$F_{frottement}$ = Force de référence due aux efforts résistants de frottement, notamment aérodynamiques et de friction des pneumatiques.
$F_{inertie}$ = Force due à l'inertie des éléments en mouvement du véhicule, notamment groupe motopropulseur, réducteur et roues.

Le terme $F_{cor}$ peut être exprimé de la façon suivante :

$$F_{Cor} = M_{vh} \cdot g \cdot \sin\left(\alpha_{pente}\right) \qquad (Eq.\ 6)$$

Avec

$M_{vh}$= masse de référence du véhicule,
g= accélération de la pesanteur
$\alpha_{Pente}$=angle de la pente,

Le terme $F_{roue}$ peut être exprimé de la façon suivante :

$$F_{roue} = \frac{C_{moteur}}{r_{réduction} \cdot R_{roue}} \qquad (Eq.\ 7)$$

Avec

$C_{moteur}$=couple fourni par le moteur,
$r_{réduction}$= rapport de réduction entre le groupe motopropulseur et la roue
$R_{roue}$ =Rayon de la roue,

Le terme $F_{frottement}$ peut être exprimé de la façon suivante :

$$F_{frottement} = \left(\frac{1}{2} \cdot \rho_{air(P,T)} \cdot SCx \cdot V_{vh}^2 + K \cdot M_{vh}\right) \qquad (Eq.\ 8)$$

Avec

$\rho_{air}(P,T)$ = densité de l'air fonction de la pression et de la température,
SCx = Produit de la surface frontale du véhicule par le coefficient de trainée de référence,
$V_{vh}$ = vitesse du véhicule
K = Coefficient de friction des pneumatiques de référence,

Le terme $F_{inertie}$ peut être exprimé de la façon suivante :

$$F_{inertie} = \left[M_{vh} + \frac{J_{moteur}}{r_{réduction}^2 \cdot R_{roue}^2} + \frac{4.J_{roue} + J_{reduction}}{R_{roue}^2}\right] \cdot R_{roue} \cdot \dot{\omega}_{roue} \quad (Eq.\ 9)$$

Avec

$J_{moteur}$ = inertie du groupe motopropulseur,
$J_{roue}$ = inertie de la roue,
$J_{réduction}$ = inertie de la réduction entre le groupe motopropulseur et la roue (=réducteur ou boîte à vitesse),
$\omega_{roue}$ = dérivée de la vitesse de la roue

On voit ainsi que le terme $F_{cor}$ varie proportionnellement avec la pente de la route exprimée en %, à la masse et aux frottements, si on considère un développement au premier ordre de la fonction sinus.

Connaissant la force fournie par le groupe motopropulseur $F_{moteur}$ et la vitesse de rotation des roues $\omega_{roue}$, deux termes suffisent à définir la force de correction $F_{cor}$. Ces termes sont la force de frottement $F_{frottement}$ et la force d'inertie $F_{inertie}$.

A partir des équations 5 à 9, on peut alors définir un coefficient de correction $Coef_{cor}$ en normalisant le terme Fcor de sorte qu'il varie entre -1 et +1. Le coefficient de correction $Coef_{cor}$ s'exprime alors de la façon suivante :

$$\text{Coef}_{\text{cor}} = A \cdot C_{\text{moteur}} - B \cdot V_{\text{vh}} - C \cdot \dot{\omega}_{\text{roue}} \qquad (\text{Eq. 10})$$

Avec :

A : un coefficient dépendant uniquement des rapports de boite et du diamètre des roues,

B et C sont des coefficients regroupés dans des tables de calibrations,

$\text{Coef}_{\text{cor}}$ : le coefficient de correction estimé en % variant de - 100% pour une descente, une augmentation de la masse du véhicule ou une diminution des frottements à +100% pour une montée, une diminution de la masse du véhicule ou une augmentation des frottements.

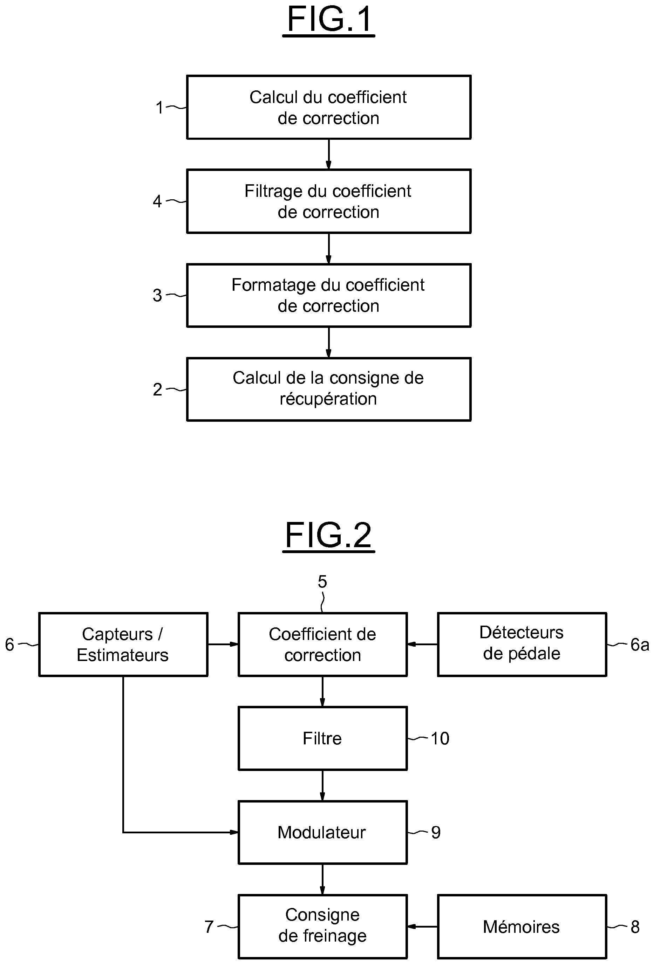

La figure 1 illustre le procédé de commande du freinage récupératif d'un véhicule automobile électrique ou hybride. Au cours d'une première étape 1 du procédé de commande, on détermine le coefficient de correction. On détermine également que les pédales de frein et d'accélérateur ne sont pas enfoncées par le conducteur.

Au cours d'une deuxième étape 2, on calcule ensuite la consigne de freinage récupératif sans appui sur la pédale de frein par interpolation linaire de deux courbes de consigne de freinage récupératif en fonction du coefficient de correction. Les courbes de consigne donnent une valeur du couple de freinage en fonction de la vitesse de rotation du groupe motopropulseur pour une pente sensiblement nulle et une masse du véhicule sensiblement égale à une masse de référence.

La première courbe définit la valeur maximale du freinage récupératif sans appui sur la pédale de frein sur une augmentation du coefficient de correction $\text{Coef}_{\text{cor}}$.

La deuxième courbe définit la valeur maximale du freinage récupératif sans appui sur la pédale de frein sur une diminution du coefficient de correction.

Les deux courbes sont définies comme une calibration en fonction du ressenti de frein moteur souhaité.

La consigne de freinage récupératif $C_{\text{fr\_cons}}$ est donc calculée en fonction du coefficient de correction $\text{Coef}_{\text{cor}}$ déterminé par application de l'équation Eq. 10 de la manière suivante :

$$C_{\text{fr\_cons}} = \frac{\left[ C_{\text{fr\_m\_cons}} \cdot \left( \frac{\text{Coef}_{\text{cor}}}{100} + 1 \right) + C_{\text{fr\_d\_cons}} \cdot \left( 1 - \frac{\text{Coef}_{\text{cor}}}{100} \right) \right]}{2} \qquad (\text{Eq. 11})$$

Avec :

$C_{\text{fr\_m\_cons}}$ = consigne de freinage récupératif sans appui sur la pédale de frein en montée

$C_{\text{fr\_d\_cons}}$ = consigne de freinage récupératif sans appui sur la pédale de frein en descente

Ce calcul permet de disposer d'une variation du freinage récupératif en fonction des variations de la pente, de la masse et des frottements.

Il est à noter qu'il est possible de déterminer une valeur reformatée du coefficient de correction en considérant un facteur de pondération du coefficient de correction $\text{Coef}_{\text{cor}}$ dépendant non linéairement de la pente subie par le véhicule.

La valeur reformatée du coefficient de corrélation est alors substituée à la valeur du coefficient de correction $\text{Coef}_{\text{Cor}}$ dans l'équation 11. Une étape 3 peut alors être intercalée entre les étapes 1 et 2 du procédé de commande.

Par ailleurs, on peut également réaliser un filtrage du coefficient de correction afin de limiter les variations trop brutales du frein moteur liées aux trop fortes variations de la pente, de la masse et des frottements. Une étape 4 peut alors être intercalée entre les étapes 1 et 2 du procédé de commande, éventuellement en combinaison avec l'étape 3.

La figure 2 illustre un système de commande du freinage récupératif d'un véhicule électrique ou hybride. Le système comprend un moyen de détermination 5 du coefficient de correction relié à un ensemble 6 de capteurs ou de moyens d'estimation des conditions de roulage et des caractéristiques du véhicule, telles que la masse. Le moyen de détermination 5 est également connecté en entrée à un moyen de détermination 6a apte à déterminer que la pédale d'accélérateur et de la pédale de frein ne sont pas enfoncées.

Le moyen de détermination 5 du coefficient de correction applique l'équation Eq. 10 afin de déterminer un coefficient de correction.

Le système comprend également un moyen de détermination 7 de la consigne de freinage relié en entrée au moyen de détermination 5 du coefficient de correction et à des mémoires 8 comprenant deux cartographies de consignes de freinage récupératif en fonction de la vitesse de rotation du groupe motopropulseur.

Le moyen de détermination 7 détermine la consigne de freinage récupératif en fonction du coefficient de correction et des cartographies en appliquant l'équation Eq. 11.

Un moyen de modulation 9 peut être connecté entre le moyen de détermination 5 du coefficient de correction et le moyen de détermination 7 de la consigne de freinage de sorte à moduler le coefficient de correction en fonction d'au moins une valeur issue des conditions de roulage et des caractéristiques du véhicule.

Un moyen de filtrage 10 peut également être disposé en sortie du moyen de détermination 5 du coefficient de correction de sorte à limiter l'amplitude des variations du coefficient de correction. Le moyen de filtrage 10 peut être associé au moyen de modulation 9 ou être employé de façon exclusive.

## Revendications

**1.** Procédé de commande du freinage récupératif d'un véhicule automobile muni d'un groupe motopropulseur électrique ou hybride, **caractérisé par le fait qu'**il comprend les étapes suivantes :

On détermine que le conducteur n'appuie ni sur la pédale d'accélérateur ni sur la pédale de frein,
On détermine un coefficient de correction en fonction du couple fourni par le moteur, de la vitesse du véhicule et de la vitesse angulaire au niveau de la roue, de la pente, de la masse du véhicule et des frottements, et
On détermine ensuite une consigne de freinage récupératif sans appui sur la pédale de frein en fonction du coefficient de correction et de deux cartographies de couple en fonction de la vitesse de rotation du groupe motopropulseur pour une pente sensiblement nulle et une masse du véhicule sensiblement égale à une masse de référence du véhicule.

**2.** Procédé selon la revendication 1, comprenant une étape de modulation entre l'étape de détermination du coefficient de correction et l'étape de détermination de la consigne de freinage, au cours de laquelle on module le coefficient de correction en fonction d'au moins une valeur issue des conditions de roulage et des caractéristiques du véhicule, notamment la pente, la masse du véhicule ou des frottements exercés sur le véhicule.

**3.** Procédé selon l'une quelconque des revendications précédentes, comprenant une étape de filtrage du coefficient de corrélation.

**4.** Système de commande du freinage récupératif d'un véhicule automobile muni d'un groupe motopropulseur électrique ou hybride, **caractérisé par le fait qu'**il comprend un moyen de détermination (5) du coefficient de correction relié en entrée à un ensemble (6) de capteurs et/ou de moyens d'estimation des conditions de roulage et des caractéristiques du véhicule ainsi qu'à un moyen de détermination (6a) apte à déterminer que la pédale d'accélérateur et de la pédale de frein ne sont pas enfoncées, et un moyen de détermination (7) de la consigne de freinage relié en entrée au moyen de détermination (5) du coefficient de correction et à des mémoires (8) comprenant deux cartographies de consignes de freinage récupératif en fonction de la vitesse de rotation du groupe motopropulseur pour une pente sensiblement nulle et une masse du véhicule sensiblement égale à une masse de référence du véhicule.

**5.** Système selon la revendication 4, comprenant un moyen de modulation (9) connecté entre le moyen de détermination (5) du coefficient de correction et le moyen de détermination (7) de la consigne de freinage de sorte à moduler le coefficient de correction en fonction d'au moins une valeur issue des conditions de roulage et des caractéristiques du véhicule, notamment la pente, la masse du véhicule ou des frottements exercés sur le véhicule.

**6.** Système selon l'une quelconque des revendications 4 ou 5, comprenant un moyen de filtrage (10) disposé en sortie du moyen de détermination (5) du coefficient de correction de sorte à limiter l'amplitude des variations du coefficient de correction.

## Patentansprüche

**1.** Verfahren zum Steuern des regenerativen Bremsens eines Kraftfahrzeugs, das mit einem Elektro- oder Hybridantrieb ausgestattet ist, **dadurch gekennzeichnet, dass** es die folgenden Schritte umfasst:

Man bestimmt, dass der Fahrer weder das Gaspedal noch das Bremspedal betätigt,
Man bestimmt einen Korrekturkoeffizienten in Abhängigkeit von dem vom Motor abgegebenen Drehmoment, der Geschwindigkeit des Fahrzeugs und der Winkelgeschwindigkeit am Rad, dem Gefälle, der Masse und den Reibungen und

Man bestimmt anschließend einen Sollwert für das regenerative Bremsen ohne Betätigen des Bremspedals in Abhängigkeit vom Korrekturkoeffizienten und von zwei Drehmomentkennfeldern in Abhängigkeit von der Drehzahl des Antriebs bei einem Gefälle von im Wesentlichen null und einer Masse des Fahrzeugs, die im Wesentlichen gleich einer Referenzmasse des Fahrzeugs ist.

**2.** Verfahren nach Anspruch 1, umfassend einen Modulationsschritt zwischen dem Schritt des Bestimmens des Korrekturkoeffizienten und dem Schritt des Bestimmens des Bremssollwerts, bei dem man den Korrekturkoeffizient in Abhängigkeit von mindestens einem Wert moduliert, der aus den Fahrbedingungen und den Merkmalen des Fahrzeugs stammt, insbesondere dem Gefälle, der Masse des Fahrzeugs oder der auf das Fahrzeug ausgeübten Reibungen.

**3.** Verfahren nach einem der vorhergehenden Ansprüche, umfassend einen Schritt des Filterns des Korrelationskoeffizienten.

**4.** System zur Steuerung des regenerativen Bremsens eines Kraftfahrzeugs, das mit einem Elektro- oder Hybridantrieb ausgestattet ist, **dadurch gekennzeichnet, dass** es ein Mittel zum Bestimmen (5) des Korrekturkoeffizienten umfasst, das eingangsseitig mit einer Anordnung (6) von Sensoren und/oder von Mitteln zum Schätzen der Fahrbedingungen und der Merkmale des Fahrzeugs sowie mit einem Mittel zum Bestimmen (6a), das geeignet ist zu bestimmen, dass das Gaspedal und das Bremspedal nicht gedrückt sind, verbunden ist, und ein Mittel zum Bestimmen (7) des Bremssollwerts umfasst, das eingangsseitig mit dem Mittel zum Bestimmen (5) des Korrekturkoeffizienten und mit Speichern (8) verbunden ist, die zwei Kennfelder mit Sollwerten für das regenerative Bremsen in Abhängigkeit von der Drehzahl des Antriebs bei einem Gefälle von im Wesentlichen null und einer Masse des Fahrzeugs, die im Wesentlichen gleich einer Referenzmasse des Fahrzeugs ist, umfasst.

**5.** System nach Anspruch 4, umfassend ein Modulationsmittel (9), das zwischen dem Mittel zum Bestimmen (5) des Korrekturkoeffizienten und dem Mittel zum Bestimmen (7) des Bremssollwerts angeschlossen ist, so dass der Korrekturkoeffizient in Abhängigkeit von mindestens einem Wert moduliert wird, der aus den Fahrbedingungen und den Merkmalen des Fahrzeugs stammt, insbesondere dem Gefälle, der Masse des Fahrzeugs oder der auf das Fahrzeug ausgeübten Reibungen.

**6.** System nach einem der Ansprüche 4 oder 5, umfassend ein Filtermittel (10), das am Ausgang des Mittels zum Bestimmen (5) des Korrekturkoeffizienten angeordnet ist, so dass es die Amplitude der Schwankungen des Korrekturkoeffizienten begrenzt.

**Claims**

**1.** Method for controlling the regenerative braking of a motor vehicle provided with an electric or hybrid powertrain, **characterized in that** it comprises the following steps:

determining that the driver is pressing neither the throttle pedal nor the brake pedal,
determining a correction coefficient as a function of the torque supplied by the motor, of the speed of the vehicle and of the angular velocity at the wheel, of the gradient, of the mass of the vehicle and of friction, and
next determining a setpoint for regenerative braking without pressure on the brake pedal as a function of the correction coefficient and of two maps of torque as a function of the rotational speed of the powertrain, for a substantially zero gradient and a vehicle mass substantially equal to a reference mass of the vehicle.

**2.** Method according to Claim 1, comprising a modulation step between the step of determining the correction coefficient and the step of determining the braking setpoint, during which the correction coefficient is modulated as a function of at least one value derived from the running conditions and from the characteristics of the vehicle, notably the gradient, the mass of the vehicle or the friction applied to the vehicle.

**3.** Method according to either one of the preceding claims, comprising a step of filtering the correlation coefficient.

**4.** System for controlling the regenerative braking of a motor vehicle equipped with an electric or hybrid powertrain, **characterized in that** it comprises a determining means (5) of determining the correction coefficient connected at input to a set (6) of sensors and/or of means of estimating the running conditions and characteristics of the vehicle and to a determining means (6a) able to determine that the throttle pedal and the brake pedal are not depressed, and a determining means (7) for determining the braking setpoint connected at input to the determining means (5) that determine the correction coefficient and to memories (8) containing two maps of regenerative braking setpoints as a function of the rotational speed of the powertrain for a substantially zero gradient and a vehicle mass substantially equal to a reference mass of the vehicle.

5. System according to Claim 4, comprising a modulating means (9) connected between the determining means (5) that determines the correction coefficient and the determining means (7) that determines the braking setpoint, so as to modulate the correction coefficient as a function of at least one value derived from the running conditions and from the characteristics of the vehicle, notably the gradient, the mass of the vehicle or friction applied to the vehicle.

6. System according to either one of Claims 4 and 5, comprising a filtering means (10) positioned at output of the determining means (5) that determines the correction coefficient, so as to limit the amplitude of the variations in the correction coefficient.

## FIG.1

1 — Calcul du coefficient de correction

↓

4 — Filtrage du coefficient de correction

↓

3 — Formatage du coefficient de correction

↓

2 — Calcul de la consigne de récupération

## FIG.2

5

6 — Capteurs / Estimateurs → Coefficient de correction ← Détecteurs de pédale — 6a

↓

Filtre — 10

↓

Modulateur — 9

↓

7 — Consigne de freinage ← Mémoires — 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 3441552 B

- EP 0754588 A1